# EUROPÄISCHE PATENTSCHRIFT

(11) **EP 2 075 297 B1**
(45) Veröffentlichungstag und Bekanntmachung des Hinweises auf die Patenterteilung: **24.02.2010**
(21) Anmeldenummer: 07122250.9
(22) Anmeldetag: 04.12.2007
(51) Int. Cl.: C09J 123/00, C09J 167/00, C09J 11/06, B32B 27/32

(54) **Heissschmelzklebstoff mit guter Haftung auf Polyolefinen**
Hot melt adhesive with good adhesion to polyolefines
Adhésif thermofusible ayant une bonne adhérence sur des polyoléfines

(43) Veröffentlichungstag der Anmeldung: 01.07.2009
(73) Patentinhaber: Sika Technology AG, 6340 Baar (CH)
(72) Erfinder: Paschkowski, Kai, 21635 Jork (DE); Plaumann, Jörg, 21075 Hamburg (DE)
(74) Vertreter: Sika Patent Attorneys

(56) Entgegenhaltungen:
- EP-A- 1 535 990
- WO-A-98/26021
- WO-A-98/58036
- US-A- 5 994 474

## Beschreibung

### Technisches Gebiet

Die vorliegende Erfindung betrifft das Gebiet der Heissschmelzklebstoffe, insbesondere für das Verkleben von Polyolefin-Folien.

### Stand der Technik

Polyolefine sind sehr schwierig zu verklebende Substrate. Da jedoch gerade Polyolefine äusserst wichtige Werkstoffe sind, ist es umso wichtiger, diese verlässlich verkleben zu können. So wurde einerseits schon seit längerem versucht, die Polyolefine durch geeignete Oberflächenmodifizierungsverfahren, wie beispielsweise diverse Plasmaverfahren oder Gasphasenfluorierungen, haftfreundlicher zu gestalten. Es wurden auch diverse Primer entwickelt, welche das Verkleben von Polyolefinen gewährleisten sollen. So konnten beispielsweise mittels Polyurethan-Heissschmelzklebstoffen und einem entsprechenden Polyolefin-Primer sehr gute Resultate in der Verklebung von Polyolefin-Folien erzielt werden.

Aber auch im Bereich der Klebstoffe wurden Anstrengungen getätigt, um verlässlich Polyolefine zu verkleben. Es zeigte sich, dass vor allem Heissschmelzklebstoffe, insbesondere Heissschmelzklebstoffe basierend auf thermoplastischen Polyolefinen, hierfür speziell gut geeignet sind.

US 5,994,474 offenbart Heissschmelzklebestoffe basierend auf silangepfropften amorphen Poly-α-olefinen.

Bei der Herstellung, Bearbeiten und der Applikation werden die hierfür benutzen Werkzeuge vielfach stark durch anhaftende Klebstoffe verschmutzt oder in ihrer Funktion beeinträchtigt. Insbesondere störend sind derartige Anhaftungen auf Walzen, drehenden Teilen wie Achsen oder Rollen sowie in Teilen, welche eine Verformung der thermoplastischen Klebstoffe bewirken sollen, wie z.B. Extrusionsdüsen, Anpresswalzen oder Kaschierwerkzeuge. Um derartige Anhaftungen zu verhindern, werden deshalb diese kritischen Werkzeugoberflächen vielfach mit Teflon beschichtet.

Es hat sich jedoch jetzt gezeigt, dass Klebstoffe, welche gute Haftung auf Polyolefinen erzielen sollen, leider auch markante Haftung auf derartigen teflonisierten Oberflächen, aufweisen.

### Darstellung der Erfindung

Aufgabe der vorliegenden Erfindung ist es daher, Klebstoffe zur Verfügung zu stellen, welche einerseits gute Haftung auf Polyolefinen aufweisen und andererseits jedoch keine oder nur geringe Haftung auf Teflon, bzw. teflonisierten Oberflächen aufweisen.

Überraschenderweise konnte nun gefunden werden, dass Heissschmelzklebstoffzusammensetzungen gemäss Anspruch 1 diese Aufgabe lösen können.

Weitere Aspekte der vorliegenden Erfindung sind eine Verwendung gemäss Anspruch 14 der Heissschmelzklebstoffzusammensetzung zum Verkleben von Polyolefin-Folien, ein Verbundkörper gemäss Anspruch 16 sowie ein Verfahren gemäss Anspruch 19 zur Herstellung eines des Verbundkörpers.

Bevorzugte Ausführungsformen der Erfindung sind Gegenstand der Unteransprüche.

### Wege zur Ausführung der Erfindung

Die Erfindung betrifft Heissschmelzklebstoffzusammensetzung, welche
- mindestens ein bei 25°C festes thermoplastisches Polyolefin (**P**)
- mindestens einen bei 25°C festen thermoplastischen Polyester (**TPE**)
- mindestens ein Amid (**A**) der Formel (I) oder (II) 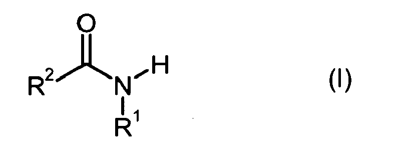 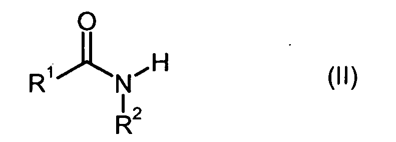
umfassen.

Hierbei steht R¹ für H, eine C₁-C₄- Alkylgruppe oder eine Benzylgruppe und R² steht für eine gesättigte oder ungesättigte C₈-C₂₂-Alkylgruppe.

Unter ungesättigt werden hierbei ,Kohlenstoff-Kohlenstoff-Doppel- oder Dreifachbindungen enthaltend' verstanden. Die Reste können auch mehrfach ungesättigt sein, d.h. es können auch mehrere solche Doppel- und/oder Dreifachbindungen in demselben Rest vorhanden sein. Falls dies der Fall ist, können diese Mehrfachbindungen konjugiert zueinander oder isoliert voneinander vorhanden sein.

Die Reste R¹ und/oder R² können unabhängig voneinander verzweigt oder unverzweigt sein. Bevorzugt sind die Reste jedoch unverzweigt. Insbesondere Verzweigungen in unmittelbarer Nähe der Amidgruppe sind nachteilig. Somit ist bevorzugt, dass der Kohlenstoff, welcher direkt verbunden mit dem Stickstoffatom, respektive dem Kohlenstoffatom, der Amidgruppe ist ein Wasserstoffatom-tragender Kohlenstoff ist, insbesondere ein Methylenkohlenstoff ist. Die Reste R² der Amide der Formel (I) weisen bevorzugt eine ungerade Anzahl Kohlenstoffatome auf, während die Reste R² der Amide der Formel (II) bevorzugt eine gerade Anzahl Kohlenstoffatome aufweist.

Bevorzugt weist das Amid (**A**) einen Schmelzpunkt zwischen 40 und 150°C, bevorzugt zwischen 50 und 110°C, auf.

In einer Ausführungsform ist das Amid (**A**) ein Amid der Formel (I).

Bevorzugte Amide (**A**) der Formel (I) weisen ein H als Substituenten R¹ auf. Diese Verbindungsklasse der primären Amide sind dem Fachmann unter dem Begriff 'Fettsäureamide' bekannt. Allerdings sind nicht alle Fettsäureamide gleich gut geeignet. Insbesondere Fettsäuren mit einem Alkylrest von mehr als 22 Kohlenstoffatomen sind nicht geeignet.

Solche Fettsäureamide R²CONH₂ lassen sich beispielsweise durch die Reaktion von den entsprechenden Fettsäuren R²COOH mit Ammoniak umsetzen.

Die Amide (**A**) der Formel (I), in denen R¹ einen C₁-C₄-Alkylrest oder einen Benzylrest darstellen, lassen sich beispielsweise durch N-Alkylierungen des entsprechenden Fettsäureamids R²CONH₂ mittels Alkylhalogenen herstellen, oder lassen sich aus der Umsetzung eines C₁-C₄-Alkylamins oder Benzylamins mit der entsprechenden Fettsäure R²COOH erhalten.

In einer weiteren Ausführungsform ist das Amid (**A**) ein Amid der Formel (II). Solche Amide lassen sich aus der Umsetzung von Fettsäureaminen R²NH₂ mit der jeweiligen Carbonsäure R¹COOH, respektive der jeweiligen Säurechloride R¹COCl, herstellen. Die hierfür eingesetzten Fettamine ihrerseits werden üblicherweise durch Reduktion aus den entsprechenden Fettsäureamiden oder direkt aus den entsprechenden Fettsäuren hergestellt.

Bei den Amiden (**A**) handelt es sich bevorzugt um technische Gemische von Amiden mit unterschiedlich langen Resten R², insbesondere um technische Gemische von Fettsäureamiden.

In einer Ausführungsform ist der Rest R² insbesondere ein ungesättigter C₈-C₂₀-Alkylrest, insbesondere ein CₙH₂ₙ₋₁-Alkylrest oder CₙH₂ₙ₋₃-Alkylrest oder CₙH₂ₙ₋₅-Alkylrest mit n = 8 - 20, bevorzugt ein olefinisch ungesättigter Alkylrest.

In einer anderen Ausführungsform ist der Rest R² ein C₈-C₂₂-Alkylrest, insbesondere ein C₁₅-C₂₂-Alkylrest.

Besonders bevorzugte Amide (**A**) der Formel (I) sind ausgewählt aus der Gruppe bestehend aus Lauryl-, Myristin-, Palmitin-, Stearin-, Arachin-, Tubercolostaearin-, Palmitolein-, Öl-, Linol-, Linolen-, Elaseostearin-, Eruca- und Arachidonsäureamid.

Bevorzugt sind Amide (**A**) der Formel (I), insbesondere Stearinsäureamid oder Erucamid. Das bevorzugteste Amid (**A**) ist Erucamid.

Weiterhin enthält die Heissschmelzklebstoffzusammensetzung mindestens ein thermoplastisches Polyolefin (**P**), welches bei 25°C fest ist.

Bevorzugt als thermoplastische Polyolefine (**P**) sind Poly-α-olefine.

In einer bevorzugten Ausführungsform ist das thermoplastische Polyolefin (**P**) ein ataktisches Poly-α-olefin (APAO) (**P1**). Diese ataktischen Poly-α-olefine lassen sich durch Polymerisation von α-Olefinen, insbesondere von Ethen, Propen, 1-Buten beispielsweise mit Ziegler-Katalysatoren herstellen. Es lassen sich Homopolymere oder Copolymere von α-Olefinen herstellen. Sie weisen gegenüber anderen Polyolefinen eine amorphe Struktur auf. Bevorzugt weisen die thermoplastischen Polyolefine (**P**) einen Erweichungspunkt (gemessen durch die Ring & Kugel-Methode, z.B. in Anlehnung an DIN EN 1427) von über 90°C, insbesondere zwischen 90°C und 130°C auf. Das Molekulargewicht Mₙ beträgt insbesondere zwischen 7'000 und 25'000 g/mol.

In einer weiteren bevorzugten Ausführungsform ist das thermoplastische Polyolefin (**P**) ein silangepfropftes Poly-α-olefin (**P2**), insbesondere ein silangepfropftes ataktisches Poly-α-olefin (APAO).

Derartige silangepfropfte Poly-α-olefine sind dem Fachmann bestens bekannt. Sie lassen sich beispielsweise durch eine Aufpfropfung von ungesättigten Silan, wie Vinyltrimethoxysilan, auf ein Poly-α-olefin erhalten. Eine detaillierte Beschreibung zur Herstellung derartiger silangepfropfter Poly-α-olefine sind beispielsweise in US 5,994,474 und DE 40 00 695 A1 offenbart.

Weiterhin bevorzugt als silangepfropfte Poly-α-olefine sind silangepfropfte Poly-α-olefine, welche mit Hilfe von Metallocen-Katalysatoren gewonnen werden, insbesondere derartige silangepfropfte Polypropylen-Homopolymere oder Polyethylen-Homopolymere.

Besonders bevorzugt enthält die Heissschmelzklebstoffzusammensetzung mindestens ein oben beschriebenes ataktisches Poly-α-olefin (APAO) (**P1**) sowie mindestens ein oben beschriebenes silangepfropftes Poly-α-olefin (**P2**) als thermoplastische Polyolefine (**P**). Besonders bevorzugt ist das Gewichtsverhältnis von ataktischem Poly-α-olefin (APAO) (**P1**) zu silangepfropftem Poly-α-olefin (**P2**) zwischen 5:1 und 1:5, bevorzugt zwischen 1:1 und 1:4.

Die Einsatzmenge von Amid (**A**) ist vorteilhaft derart, dass die Heissschmelzklebstoffzusammensetzung eine Menge von ≥ 5 Gew.-%, insbesondere von 5.0 - 20.0 Gew.-%, bevorzugt 7.0 - 15.0 Gew.-%, bezogen auf die Heissschmelzklebstoffzusammensetzung, aufweist.

Die Einsatzmenge von thermoplastischen Polyolefin (**P**) ist vorteilhaft derart, dass die Heissschmelzklebstoffzusammensetzung eine Menge von ≥ 50 Gew.-%, insbesondere von 50 - 95 Gew.-%, bevorzugt 60 - 80 Gew.-%, bezogen auf die Heissschmelzklebstoffzusammensetzung, an thermoplastischen Polyolefin (**P**) aufweist.

Die Heissschmelzklebstoffzusammensetzung enthält weiterhin mindestens einen bei 25°C festen thermoplastischen Polyester (**TPE**), insbesondere in einer Menge von 5 - 30 Gew.-%, bevorzugt von 7 - 15 Gew.-%, bezogen auf die Heissschmelzklebstoffzusammensetzung.

Der thermoplastische Polyester (**TPE**), ist bei Raumtemperatur fest. Bevorzugt sind für die thermoplastischen Polyester kristalline, vorzugsweise aromatische, thermoplastische Polyester (**TPE**). Besonders geeignete derartige thermoplastische Polyester (**TPE**) sind lineare Polycaprolacton-Copolyester-Urethane.

Sie weisen insbesondere einen Meltflowindex (DIN 53.735) von mehr als 15 g / 10 min, bevorzugt von 25 - 100 g/10 min, (170°C, 2.16 kg) und insbesondere eine OH-Zahl von weniger als 5 mg KOH/g, bevorzugt von weniger als 4 mg KOH/g, auf.

Es können bei Bedarf auch weitere thermoplastische Polymere vorhanden sein. Insbesondere handelt es sich hierbei um Homo- oder Copolymere von mindestens einem Monomer, welches ausgewählt ist aus der Gruppe bestehend aus Ethylen, Propylen, Butylen, Isobutylen, Isopren, Vinylacetat, Vinylester höherer Carbonsäuren und Ester der (Meth)acrylsäure. Insbesondere geeignet als derartiges zusätzliches thermoplastisches Polymer sind Ethylenvinylacetat-Copolymere.

Die Heissschmelzklebstoffzusammensetzung enthält weiterhin bevorzugt mindestens einen Katalysator, welcher die Reaktion von Silangruppen katalysiert, insbesondere in einer Menge von 0.01 - 1.0 Gew.-%, bevorzugt von 0.1 - 0.5 Gew.-%, bezogen auf die Heissschmelzklebstoffzusammensetzung. Als derartige Katalysatoren gelten insbesondere Zinn-organische Verbindung, bevorzugt Dibutylzinndilaurat (DBTL).

Es ist dem Fachmann klar, dass derartige Katalysatoren vor allem dann eingesetzt werden, wenn die Heissschmelzklebstoffzusammensetzung Silangruppen, insbesondere in Form von silangepfropften Poly-α-olefinen (**P2**), enthält.

Weiterhin weist die Heissschmelzklebstoffzusammensetzung vorteilhaft weitere Bestandteile auf. Als weitere Bestandteile sind insbesondere Bestandteile, welche ausgewählt sind aus der Gruppe umfassend Weichmacher, Haftvermittler, UV-Absorptionsmittel, UV- und Wärmestabilisatoren, optische Aufheller, Fungizide, Pigmente, Farbstoffe, Füllstoffe und Trocknungsmittel.

Wenn die Heissschmelzklebstoffzusammensetzung silangepfropftes Poly-α-olefin (**P2**) als thermoplastisches Polyolefin (**P**) enthält, hydrolysieren die Silangruppen durch den Einfluss von Wasser, insbesondere in Form von Luftfeuchtigkeit, zu Silanolgruppen (-SiOH), welche ihrerseits miteinander reagieren und so unter Bildung von Siloxangruppen (-Si-O-Si-) zur Vernetzung der Heissschmelzklebstoffzusammensetzung führen. Derartige Heissschmelzklebstoffzusammensetzungen werden als reaktive Heissschmelzklebstoffe bezeichnet.

Es ist deshalb vorteilhaft, darauf zu achten, dass für die Herstellung von zumindest denjenigen Heissschmelzklebstoffzusammensetzungen, welche silangepfropfte Poly-αolefine (**P2**) enthalten, möglichst gut getrocknete Rohstoffe verwendet werden und dass die Klebstoffe während der Herstellung, Lagerung und Applikation möglichst vor dem Kontakt mit Wasser oder Luftfeuchtigkeit geschützt werden.

Grundsätzlich erfolgt die Herstellung auf übliche, dem Fachmann für Heissschmelzklebstoffe bekannte, Art und Weise.

Die Heissschmelzklebstoffzusammensetzungen werden durch Aufheizen verflüssigt, indem sich die thermoplastischen Inhaltsstoffe aufschmelzen. Die Viskosität der Heissschmelzklebstoffzusammensetzungen sollte angepasst sein auf die Applikationstemperatur. Typischerweise ist die Applikationstemperatur 100 bis 200 °C. Bei dieser Temperatur ist der Klebstoff gut verarbeitbar. Die Viskosität beträgt vorzugsweise in diesem Temperaturbereich 2'000 - 50'000 mPas. Ist sie wesentlich höher, ist die Applikation sehr schwierig. Ist sie wesentlich tiefer, ist der Klebstoff so dünnflüssig, so dass er bei der Applikation von der zu verklebenden Werkstoffoberfläche wegläuft, bevor er aufgrund des Abkühlens sich verfestigt.

Das durch die Abkühlung erfolgende Erstarren und Verfestigen des Klebstoffes bewirkt einen schnellen Festigkeitsaufbau und hohe Anfangshaftfestigkeit eines Klebverbundes. Es ist bei der Verwendung eines Klebstoffes darauf zu achten, dass das Verkleben innerhalb der Zeit erfolgt, in der der Klebstoff noch nicht zu stark abgekühlt ist, d.h. das Verkleben muss erfolgen, so lange der Klebstoff noch flüssig, bzw. zumindest noch klebrig und verformbar, ist. Falls die Heissschmelzklebstoffzusammensetzungen reaktiv sind, d.h. falls sie silangepfropfte Poly-α-olefine (**P2**) enthalten, wird der Klebstoff auch nach dem Erkalten durch den Einfluss von Wasser, insbesondere von Luftfeuchtigkeit weitervernetzen und so innert einer kurzen Zeit von typischerweise wenigen Stunden oder Tagen weiter an mechanischer Festigkeit gewinnen. Im Gegensatz zu den nicht reaktiven Heissschmelzklebstoffzusammensetzungen lassen sich reaktive Heissschmelzklebstoffzusammensetzungen nicht reversibel erhitzen und dadurch wieder verflüssigen. Somit ist der Einsatz von silangepfropften Poly-α-olefinen (**P2**) insbesondere für solche Anwendungen vorteilhaft, in welchen der verklebte Verbundkörper im Laufe seines Gebrauches, bzw. Lebens, in Kontakt mit hohen Temperaturen kommt ohne dass die Verklebung Schaden nimmt. Ebenso ist der Einsatz von silangepfropften Poly-α-olefinen (**P2**) dahin gehend vorteilhaft, dass durch die Vernetzung bedingt, derartige Klebstoffe bedeutend weniger kriechen.

Es hat sich gezeigt, dass die vorgängig beschriebenen Heissschmelzklebstoffzusammensetzungen bestens zum Verkleben von Polyolefin-Folien verwendet werden können. Insbesondere bevorzugt werden sie als Kaschierklebstoffe zum Verkleben von Polyolefin-Folien verwendet.

Ein weiterer Aspekt der Erfindung betrifft einen Verbundkörper, welche eine Polyolefin-Folie (**PF**), eine vorgängig beschriebene Heissschmelzklebstoffzusammensetzung (**K**), bzw. (für den Fall, dass die Heissschmelzklebstoffzusammensetzung silangepfropfte Poly-α-olefine (**P2**) enthalten) eine durch den Einfluss von Wasser vernetzte vorgängig beschriebene Heissschmelzklebstoffzusammensetzung (**K'**), sowie ein Substrat (**S**) aufweisen.

Hierbei ist die Heissschmelzklebstoffzusammensetzung, bzw. die vernetzte Heissschmelzklebstoffzusammensetzung, zwischen Polyolefin-Folie und Substrat (**S**) angeordnet.

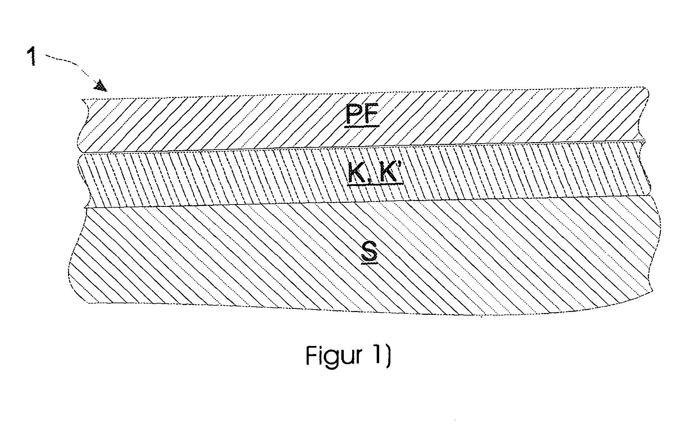

Figur 1 stellt schematisch einen derartigen Verbundkörper (1) dar, welcher eine Polyolefin-Folie (**PF**) und ein Substrat (**S**) sowie eine Heissschmelzklebstoffzusammensetzung (**K**), bzw. eine durch den Einfluss von Wasser vernetzte Heissschmelzklebstoffzusammensetzung (**K'**), welche zwischen Polyolefin-Folie und Substrat angeordnet ist und so diese zwei Substrate miteinander verklebt.

Als "Polyolefin-Folie" werden insbesondere biegsame flächige Polyolefine in einer Dicke von 0.05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Polyolefin-Folien (**PF**) werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass Polyolefin-Folien auch noch andere Zusatzstoffe und Verarbeitungsmittel, wie Füllstoffe, UV- und Hitzestabilisatoren, Weichmacher, Gleitmittel, Biozide, Flammschutzmittel, Antioxidantien, Pigmente wie z.B. Titandioxid oder Russ, und Farbstoffe enthalten können. Das heisst, es werden auch derartige Folien als Polyolefin-Folien bezeichnet, welche nicht zu 100% aus Polyolefinen bestehen.

Das Substrat (**S**), vielfach auch als Träger bezeichnet, kann von verschiedener Art und Natur sein. Die Substrate können beispielsweise aus Metall, lackiertem Metall, aus Kunststoff, Holz, Holzwerkstoffen oder Fasermaterialien sein. Das Substrat ist vorzugsweise ein fester, geformter Körper.

Insbesondere handelt es sich beim Substrat (**S**) um ein Fasermaterial, insbesondere ein Naturfasermaterial.

Bei Bedarf kann die Oberfläche des Substrates (**S**) vorbehandelt sein. Insbesondere kann eine derartige Vorbehandlung ein Reinigen oder ein Auftragen eines Primers darstellen. Bevorzugt ist jedoch das Aufbringen von Primern nicht notwendig.

Der beschriebene Verbundkörper ist vorzugsweise ein Artikel der industriellen Fertigung, insbesondere ein Artikel für den Innenausbau, bevorzugt ein Einbauteil in ein Transportmittel oder ein Artikel der Möbelbranche.

Besonders wichtig ist der Einsatz für die Herstellung von Innenauskleidungsteilen von Fahrzeugen, insbesondere von Automobilen. Bespiele für derartige Innenauskleidungsteile sind Türseitenteile, Schalttafeln, Hutablagen, Fertighimmel, Schiebehimmel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen.

Ein weiterer Aspekt der vorliegenden Erfindung ist auch ein Verfahren zur Herstellung eines Verbundwerkstoffs, wie er soeben beschrieben worden ist. Dieses Verfahren umfasst die Schritte
(i) Aufschmelzen einer vorgängig beschriebenen Heissschmelzklebstoffzusammensetzung
(ii) Applizieren der geschmolzenen Heissschmelzklebstoffzusammensetzung auf eine Polyolefin-Folie (**PF**)
(iii) Erwärmen der Polyolefin-Folie
(iv) Kontaktieren des Substrates (**S**) mit der aufgeschmolzenen Heissschmelzklebstoffzusammensetzung.

Hierfür wird insbesondere ein Vakuumtiefziehverfahren oder eine Presskaschierung im Siegelverfahren verwendet.

Beim Vakuumtiefziehverfahren wird die Polyolefin-Folie (**PF**) (Dekor aus luftundurchlässigem Material) typischerweise in einem Rahmen luftdicht eingespannt. Unterhalb der Folie befindet sich eine Unterform auf die der Träger gelegt wird. Unterform und Träger sind durchbohrt beziehungsweise luftdurchlässig. Das Gerät ist unterwärts weiter luftdicht abgeschlossen. Beim Absaugen der Luft aus dieser Vorrichtung schmiegt sich nun das Dekormaterial unter dem auf seiner Oberfläche lastenden atmosphärischen Druck passgenau auf das Trägerteil. Das Dekormaterial wird vor dem Anlegen des Vakuums, bzw. Unterdruckes, erhitzt. Das Dekormaterial ist wegen des zu erzeugenden Vakuums, bzw. Unterdruckes, luftundurchlässig

Besonders vorteilhaft hierbei ist, dass der Klebstoff direkt auf die Polyolefin-Folie appliziert werden kann und nicht auf den Träger, wie dies zum Beispiel bei Polyurethandispersionsklebstoffen der Fall ist.

Somit erfolgt der Schritt des Kontaktierens insbesondere unter einem Anpressdruck, insbesondere zwischen 0.1 bar und 1 bar, bevorzugt mindestens 0.8 bar, (entsprechend einem Anlegen eines Vakuums von bis zu 0.9 bar, bevorzugt von mindestes 0.2 bar) erfolgt.

Der Anpressdruck erfolgt vorzugsweise durch ein Anlegen eines Unterdruckes im Raum zwischen Substrat (**S**) und Polyolefin-Folie (**PF**) erzeugt wird. Der oben erwähnte Anpressdruck kommt deshalb insbesondere durch ein Anlegen eines Unterdruckes von bis zu 0.9 bar, bevorzugt von mindestes 0.2 bar) zustande.

Der Schritt des Kontaktierens erfolgt vorzugsweise bei einer Klebstofftemperatur von 50°C oder mehr, insbesondere eine Temperatur zwischen 50 und 200°C, bevorzugt zwischen 100 und 150°C.

Beim Presskaschierungsverfahren wird die aufgeschmolzene Heissschmelzklebstoffzusammensetzung entweder auf den Träger und/oder die Polyolefin-Folie (**PF**)(Dekor) aufgetragen. Die Verklebung vom Träger mit dem Dekor erfolgt vorzugsweise unter Wärmeeinfluss unter Fügen und Pressen.

Die hier benutzten Polyolefin-Folien sind vielfach Dekorfolien und weisen eine Oberflächenstruktur auf. Diese Oberflächenstruktur auf der Kunststofffolie kann beispielsweise vor oder während oder nach dem Verkleben eingeprägt werden.

Wesentlich und völlig überraschend an der vorliegenden Erfindung ist die Tatsache, dass die beschriebenen Heissschmelzklebstoffzusammensetzungen einerseits in der Lage sind Polyolefine, welche aufgrund der chemischen Struktur bekannterweise äusserst haftunfreundliche apolare Materialien darstellen, sogar ohne die Verwendung von speziellen Primern oder von Oberflächenmodifizier-Verfahren, wie Plasmabehandlungen oder Gasphasenfluorierung, verlässlich zu verkleben, und dass andererseits trotzdem die Heissschmelzklebstoffzusammensetzungen auf Teflon-beschichteten Oberflächen von Applikationswerkzeugen, insbesondere von Walzen, Düsen oder Kaschierwerkzeugen, nicht oder nur sehr minimal anhaften.

### Beispiele

**Tabelle 1. Charakterisierung der verwendeten Rohstoffe und deren Abkürzung.**

| | |
|---|---|
| ***P1-1*** | ataktisches Poly-α-olefin (APAO)(hoher Anteil an Propen) |
| | Molekulargewicht (Mn): 18'100 g/mol, |
| | Schmelzviskosität (190°C, DIN 53 019): 50'000 mPa.s, |
| | Erweichungstemperatur (Ring & Kugel): 107°C |
| ***P2-1*** | silangepfropftes Poly-α-olefin, |
| | Molekulargewicht (Mn): 10'600 g/mol, |
| | Schmelzviskosität (190°C, DIN 53 018): 5'000 mPa.s, |
| | Erweichungstemperatur (Ring & Kugel): 98°C |
| ***P2-2*** | silangepfropftes Polyethylen (Poly-α-olefin) (durch Metallocen-Katalyse erhalten) (10 Gew.-% an gepfropftem Vinyltrimethoxysilan) |
| | Erweichungstemperatur: ca. 80°C |
| | Schmelzviskosität (140°C DIN 53 018): ca. 250 mPa.s |
| ***P2-3*** | silangepfropftes Poly(propylen/ethylen) (Poly)-α-olefin) (durch Metallocen-Katalyse erhalten) |
| | Schmelzviskosität (170°C DIN 53 018): ca. 100 mPa.s, |
| | Tropfpunkt: ca. 80°C |
| | Dichte: ca. 0.90 g/cm³ |
| | Silangehalt: ca.1 Gew.-% (Pfropfungsmittel:Vinyltriethoxysilan) |
| ***TPE-1*** | lineares Polycaprolacton-Copolyester-Urethan (Thermoplastischer Polyester) |
| | Meltflowindex (DIN 53.735, 170°C, 2.16 kg): 30 - 60 g /10 min |
| | OH-Zahl: <3 mg KOH/g |
| | Schmelzviskosität (130°C, DIN 53.735): 950 Pa.s |
| ***Stab*** | sterisch gehindertes phenolisches Antioxidans aus der Irganox^{®}-Reihe von Ciba Specialty Chemicals |

Es wurden Klebstoffzusammensetzungen hergestellt, indem die Inhaltsstoffe gemäss den in Tabelle 2 angegebenen Gewichtsteilen miteinander bei einer Temperatur von 180°C und unter Inertatmosphäre in einem Rührwerk vermengt wurden.

### Prüfmethoden.

### Viskosität

Nach dem Aufschmelzen des jeweiligen Heissschmelzklebstoffes in einer verschlossenen Tube während 20 Minuten bei 140°C im Wärmeschrank wurden 12.3 mg Klebstoff in eine Einweghülse abgewogen und während 20 Minuten im Viskosimeter bei der jeweiligen in Tabelle 2 angegebenen Temperatur temperiert. Die Messung der Viskosität erfolgte bei 5 (160°C) oder 10 Umdrehungen pro Minute (180°C) auf einem Brookfield DV-2 Thermosel Viskosimeter mit Spindel Nr. 27. Als Viskosität wird derjenige Wert ausgewählt, der sich nach 5 Minuten Messung einstellt. In Tabelle 2 wird der gemessene Wert bei 160°C als "Visk₁₆₀" und der Wert bei 180°C als "Visk₁₈₀" angegeben.

### Erweichungspunkt

Der Erweichungspunkt der Zusammensetzungen wurde mit der Ring&Kugel-Methode in Anlehnung an DIN 52011 gemessen und in Tabelle 2 als "T_{R&K}" angegeben.

### Schälfestigkeit

Zur Bestimmung der Schälfestigkeit wurden zuerst die jeweilige Klebstoffzusammensetzung unter Aufschmelzen derselben auf eine Temperatur von 160 °C aufgeheizt. Der Klebstoff wird mittels 500µm Rakel auf ein Silikonpapier appliziert. Dieses geschieht bei 200°C auf der Heizplatte. Zuschnitte einer thermoplastischen Poly-Olefin-Folie (TPO-Folie, Hersteller Benecke Kaliko, Dicke: 2,8mm, nicht geprimert) werden anschließend in den 200°C heißen Klebstofffilm eingelegt. Nach dem Übertragen des Klebstoffs wird die beschichtete Folie von der Heizplatte genommen, so dass der Klebstoff abbinden kann.

Zur Verklebung der so vorbeschichteten Folie auf das Prüfblech (teflonbeschichtetes Stahlblech, Beschichtung: TempCoat® 1008F, Firma Impreglon) wir die Folie rückseitig, sprich der Klebstofffilm, mittels IR-Strahler auf 205°C erhitzt. Nach Erreichen der gewünschten Temperatur erfolgt das Verpressen mittels Plattenpresse auf das Prüfblech. Die Pressdauer beträgt 10 s. Der Pressdruck beträgt 0,3MPa. Nach erfolgtem Abkühlen und Erstarren des Klebstoffs wird die Verbundfestigkeit zwischen Folie und Prüfblech als Rollen-Schälwert ermittelt. (ca. 30min Handhabungszeit werden benötigt zwischen Kaschieren und Prüfen). Bei der Rollen-Schälprüfung wird mit 100mm/min gezogen. Verwendet wird die Zwick Zug-Prüfmaschine Z020.

Der maximale Wert der Schälfestigkeit, welcher hierbei gemessen wurde, wird in Tabelle 2 als "SFₘₐₓ" bezeichnet, während der gemessene Mittelwert der Schälfestigkeit als "SFₓ" bezeichnet wird.

Ein Wert für SFₘₐₓ von kleiner als 7.5 N/5cm gilt als ein akzeptabler Wert für eine geringe Haftung auf Teflon. Besonders erwünscht sind jedoch Werte von kleiner als 5 N / 5cm. Es wird weiterhin gewünscht, dass der Wert für SFₓ wesentlich kleiner als derjenige für SFₘₐₓ ist, besonders vorteilhaft ist das Verhältnis von SFₓ / SFₘₐₓ von kleiner als 0.5, bevorzugt kleiner als 0.4.

**Tabelle 2. Heissschmelzklebstoffzusammensetzungen und**

| | ***1*** | ***2*** | ***3*** | ***Ref.1*** | ***Ref.2*** | ***Ref.3*** |
|---|---|---|---|---|---|---|
| ***P1-1*** | 20 | 20 | 20 | 20 | 20 | 20 |
| ***P2-1*** | 50 | 50 | 50 | 50 | 50 | 50 |
| ***P2-2*** | 10 | 10 | | | | |
| ***P2-3*** | | | 10 | 20 | 10 | 10 |
| ***TPE-1*** | 10 | 15 | 10 | 10 | 10 | - |
| **Erucamid** | 10 | 5 | 10 | - | - | 10 |
| ***Stab*** | 0.6 | 0.6 | 0.6 | 0.6 | 0.6 | 0.6 |
| **DBTL** | 0.1 | 0.1 | 0.1 | 0.1 | 0.1 | 0.1 |
| Visk₁₆₀ [Pas] | 16.8 | 25.7 | 26.0 | 18.1 | 13.1 | 11.1 |
| Visk₁₈₀ [Pas] | 12.1 | 19.7 | 19.7 | 12.1 | 8.1 | 7.8 |
| T_{R&K} [°C] | 98 | 95 | 101 | 90 | 117 | 97 |
| SFₘₐₓ [N/5cm] | 2.3 | 7 | 3.5 | 9.8 | 24.2 | 13.2 |
| SFₓ [N/5cm] | 0.9 | 4.9 | 1.3 | 6.4 | 11.9 | 7.0 |

### Testergebnisse.

Bei keinem der getesteten Klebstoffzusammensetzungen wurde ein adhäsives Bruchbild auf der Polyolefin-Folie festgestellt.

## Patentansprüche

1. Heissschmelzklebstoffzusammensetzung umfassend
- mindestens ein bei 25°C festes thermoplastisches Polyolefin (**P**)
- mindestens einen bei 25°C festen thermoplastischen Polyester (**TPE**)
- mindestens ein Amid (**A**) der Formel (I) oder (II) 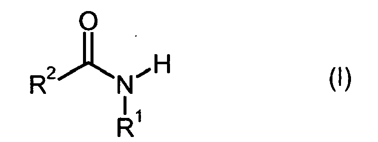 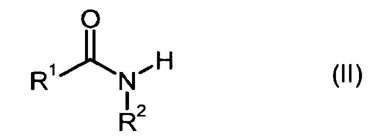
wobei R¹ für H, eine C₁-C₄-Alkylgruppe oder eine Benzylgruppe steht,
R² für eine gesättigte oder ungesättigte C₈-C₂₂-Alkylgruppe steht.

2. Heissschmelzklebstoffzusammensetzung gemäss Anspruch 1, **dadurch gekennzeichnet, dass** das thermoplastische Polyolefin (**P**) ein ataktisches Poly-α-olefin (APAO) (**P1**) ist.

3. Heissschmelzklebstoffzusammensetzung gemäss Anspruch 1, **dadurch gekennzeichnet, dass** das thermoplastische Polyolefin (**P**) ein silangepfropftes Poly-α-olefin (**P2**) ist.

4. Heissschmelzklebstoffzusammensetzung gemäss einem der vorhergehenden Ansprüche, **dadurch gekennzeichnet, dass** R² ein ungesättigter C₈-C₂₀-Alkylrest, insbesondere ein CₙH₂ₙ₋₁-Alkylrest oder CₙH₂ₙ₋₃-Alkylrest oder CₙH₂ₙ₋₅-Alkylrest mit n = 8 - 20, bevorzugt ein olefinisch ungesättigter Alkylrest, ist.

5. Heissschmelzklebstoffzusammensetzung gemäss einem der vorhergehenden Ansprüche, **dadurch gekennzeichnet, dass** R² ein C₈-C₂₂-Alkylrest, insbesondere ein C₁₅-C₂₂-Alkylrest ist.

6. Heissschmelzklebstoffzusammensetzung gemäss einem der vorhergehenden Ansprüche, **dadurch gekennzeichnet, dass** das Amid (**A**) die Formel (I) aufweist und R¹ für H steht.

7. Heissschmelzklebstoffzusammensetzung gemäss einem der vorhergehenden Ansprüche, **dadurch gekennzeichnet, dass** das Amid (**A**) ausgewählt ist aus der Gruppe bestehend aus Lauryl-, Myristin-, Palmitin-, Stearin-, Arachin-, Tubercolostaearin-, Palmitolein-, Öl-, Linol-, Linolen-, Elaseostearin-, Eruca- und Arachidonsäureamid, insbesondere, dass das Amid (**A**) Stearinsäureamid oder Erucamid, bevorzugt Erucamid, ist.

8. Heissschmelzklebstoffzusammensetzung gemäss einem der vorhergehenden Ansprüche, **dadurch gekennzeichnet, dass** das Amid (**A**) einen Schmelzpunkt zwischen 40 und 150°C, bevorzugt zwischen 50 und 110°C, aufweist.

9. Heissschmelzklebstoffzusammensetzung gemäss einem der vorhergehenden Ansprüche, **dadurch gekennzeichnet, dass** die Heissschmelzklebstoffzusammensetzung eine Menge von ≥ 5 Gew.-%, insbesondere von 5.0 - 20.0 Gew.-%, bevorzugt 7.0 - 15.0 Gew.-%, bezogen auf die Heissschmelzklebstoffzusammensetzung, an Amid (**A**) aufweist.

10. Heissschmelzklebstoffzusammensetzung gemäss einem der vorhergehenden Ansprüche, **dadurch gekennzeichnet, dass** der thermoplastische Polyester (**TPE**) ein lineares Polycaprolacton-Copolyester-Urethan ist.

11. Heissschmelzklebstoffzusammensetzung gemäss einem der vorhergehenden Ansprüche, **dadurch gekennzeichnet, dass** die die Heissschmelzklebstoffzusammensetzung eine Menge in einer Menge von 5 - 30 Gew.-%, bevorzugt von 7 - 15 Gew.-%, bezogen auf die Heissschmelzklebstoffzusammensetzung, an thermoplastischen Polyester (**TPE**) aufweist.

12. Heissschmelzklebstoffzusammensetzung gemäss einem der vorhergehenden Ansprüche, **dadurch gekennzeichnet, dass** die Heissschmelzklebstoffzusammensetzung weiterhin mindestens einen Katalysator, welcher die Reaktion von Silangruppen katalysiert, insbesondere in einer Menge von 0.01 - 1.0 Gew.-%, bevorzugt von 0.1 - 0.5 Gew.-%, bezogen auf die Heissschmelzklebstoffzusammensetzung, aufweist.

13. Heissschmelzklebstoffzusammensetzung gemäss einem der vorhergehenden Ansprüche, **dadurch gekennzeichnet, dass** die Heissschmelzklebstoffzusammensetzung eine Menge von ≥ 50 Gew.-%, insbesondere von 50 - 95 Gew.-%, bevorzugt 60 - 80 Gew.-%, bezogen auf die Heissschmelzklebstoffzusammensetzung, an thermoplastischen Polyolefin (**P**) aufweist.

14. Verwendung einer Heissschmelzklebstoffzusammensetzung gemäss einem der Ansprüche 1 bis 13 zum Verkleben von Polyolefin-Folien.

15. Verwendung gemäss Anspruch 14 als Kaschierklebstoff zum Verkleben von Polyolefin-Folien.

16. Verbundkörper (1) aufweisend
- eine Polyolefin-Folie (**PF**);
- eine Heissschmelzklebstoffzusammensetzung gemäss einem der Ansprüche 1 bis 13, bzw. eine durch den Einfluss von Wasser vernetzte Heissschmelzklebstoffzusammensetzung gemäss einem der Ansprüche 1 bis 13; sowie
- ein Substrat (**S**);
wobei der die Heissschmelzklebstoffzusammensetzung, bzw. die vernetzte Heissschmelzklebstoffzusamrriensetzung, zwischen Polyolefin-Folie und Substrat (**S**) angeordnet ist

17. Verbundkörper gemäss Anspruch 16, **dadurch gekennzeichnet, dass** das Substrat (**S**) ein Fasermaterial, insbesondere ein Naturfasermaterial ist.

18. Verbundkörper gemäss Anspruch 16 oder 17, **dadurch gekennzeichnet, dass** der Verbundkörper ein Artikel der industriellen Fertigung, insbesondere ein Artikel für den Innenausbau, bevorzugt ein Einbauteil in ein Transportmittel, oder ein Artikel der Möbelbranche ist.

19. Verfahren zur Herstellung eines Verbundwerkstoffs gemäss Anspruch 16 oder 17 oder 18 umfassend die Schritte
(i) Aufschmelzen einer Heissschmelzklebstoffzusammensetzung gemäss einem der Ansprüche 1 bis 13
(ii) Applizieren der geschmolzenen Heissschmelzklebstoffzusammensetzung auf eine Polyolefin-Folie (**PF**)
(iii) Erwärmen der Polyolefin-Folie
(iv) Kontaktieren des Substrates (**S**) mit der aufgeschmolzenen Heissschmelzklebstoffzusammensetzung.

20. Verfahren gemäss Anspruch 19, **dadurch gekennzeichnet, dass** der Schritt des Kontaktierens unter einem Anpressdruck, insbesondere zwischen 0.1 bar und 1 bar, bevorzugt mindestens 0.8 bar, erfolgt.

21. Verfahren gemäss Anspruch 20, **dadurch gekennzeichnet, dass** der Anpressdruck durch ein Anlegen eines Unterdruckes im Raum zwischen Substrat (**S**) und Polyolefin-Folie (**PF**) erzeugt wird.

22. Verfahren gemäss Anspruch 20 oder 21, **dadurch gekennzeichnet, dass** der Schritt des Kontaktierens bei einer Klebstofftemperatur von 50°C oder mehr, insbesondere eine Temperatur zwischen 50 und 200°C, bevorzugt zwischen 100 und 150°C, erfolgt.

## Claims

1. Hotmelt adhesive composition comprising
- at least one thermoplastic polyolefin (**P**) being solid at 25°C
- at least one thermoplastic polyester (**TPE**) being solid at 25°C
- at least one amide (**A**) of the formula (I) or (II) 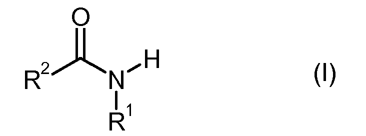 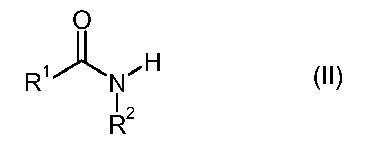
where R¹ is H, a C₁-C₄-alkyl group or a benzyl group and
R² is a saturated or unsaturated C₈-C₂₂-alkyl group.

2. Hotmelt adhesive composition according to Claim 1, **characterized in that** the thermoplastic polyolefin (**P**) is an atactic poly-α-olefin (APAO) (**P1**).

3. Hotmelt adhesive composition according to Claim 1, **characterized in that** the thermoplastic polyolefin (**P**) is a silane-grafted poly-α-olefin (**P2**).

4. Hotmelt adhesive composition according to any one of the preceding claims, **characterized in that** R² is an unsaturated C₈-C₂₀-alkyl radical, more particularly a CₙH₂ₙ₋₁-alkyl radical or CₙH₂ₙ₋₃-alkyl radical or CₙH₂ₙ₋₅-alkyl radical with n = 8 - 20, preferably an olefinically unsaturated alkyl radical.

5. Hotmelt adhesive composition according to any one of the preceding claims, **characterized in that** R² is a C₈-C₂₂-alkyl radical, more particularly a C₁₅-C₂₂-alkyl radical.

6. Hotmelt adhesive composition according to any one of the preceding claims, **characterized in that** the amide (**A**) has the formula (I) and R¹ is H.

7. Hotmelt adhesive composition according to any one of the preceding claims, **characterized in that** the amide (**A**) is selected from the group consisting of lauryl-, myristyl-, palmityl-, stearyl-, arachidyl-, tuberculostearyl-, palmitoleyl-, oleyl-, linoleyl-, linolenyl-, elaeostearyl-, erucyl- and arachidonylamide, more particularly **in that** the amide (**A**) is stearylamide or erucamide, preferably erucamide.

8. Hotmelt adhesive composition according to any one of the preceding claims, **characterized in that** the amide (**A**) has a melting point of between 40 and 150°C, preferably between 50 and 110°C.

9. Hotmelt adhesive composition according to any one of the preceding claims, **characterized in that** the hotmelt adhesive composition contains an amount of amide (**A**) of ≥ 5% by weight, more particularly of 5.0%-20.0% by weight, preferably 7.0%-15.0% by weight, based on the hotmelt adhesive composition.

10. Hotmelt adhesive composition according to any one of the preceding claims, **characterized in that** the thermoplastic polyester (**TPE**) is a linear polycaprolactone copolyester urethane.

11. Hotmelt adhesive composition according to any one of the preceding claims, **characterized in that** the hotmelt adhesive composition contains an amount of thermoplastic polyester (**TPE**) of 5%-30% by weight, preferably of 7%-15% by weight, based on the hotmelt adhesive composition.

12. Hotmelt adhesive composition according to any one of the preceding claims, **characterized in that** the hotmelt adhesive composition further comprises at least one catalyst which catalyzes the reaction of silane groups, more particularly in an amount of 0.01%-1.0% by weight, preferably of 0.1 %-0.5% by weight, based on the hotmelt adhesive composition.

13. Hotmelt adhesive composition according to any one of the preceding claims, **characterized in that** the hotmelt adhesive composition contains an amount of thermoplastic polyolefin (**P**) of ≥ 50% by weight, more particularly of 50%-95% by weight, preferably 60%-80% by weight, based on the hotmelt adhesive composition.

14. Use of a hotmelt adhesive composition according to any one of Claims 1 to 13 for the adhesive bonding of polyolefin films.

15. Use according to Claim 14 as a laminating adhesive for the adhesive bonding of polyolefin films.

16. Assembly (1) comprising
- a polyolefin film (**PF**);
- a hotmelt adhesive composition according to any one of Claims 1 to 13, or a hotmelt adhesive composition according to any one of Claims 1 to 13 that has been crosslinked by the influence of water; and
- a substrate (**S**);
the hotmelt adhesive composition, or the crosslinked hotmelt adhesive composition, being disposed between polyolefin film and substrate (**S**).

17. Assembly according to Claim 16, **characterized in that** the substrate (**S**) is a fibre material, more particularly a natural fibre material.

18. Assembly according to Claim 16 or 17, **characterized in that** the assembly is an article of industrial manufacture, more particularly an article for interior fitment, preferably a part for installation in a means of transport, or an article of the furniture sector.

19. Method of producing a composite material according to Claim 16 or 17 or 18, comprising the steps of
(i) melting a hotmelt adhesive composition according to any one of Claims 1 to 13
(ii) applying the melted hotmelt adhesive composition to a polyolefin film (**PF**)
(iii) heating the polyolefin film
(iv) contacting the substrate (**S**) with the melted hotmelt adhesive composition.

20. Method according to Claim 19, **characterized in that** the step of contacting takes place under an applied pressure, more particularly between 0.1 bar and 1 bar, preferably at least 0.8 bar.

21. Method according to Claim 20, **characterized in that** the applied pressure is generated by the application of an underpressure in the space between substrate (**S**) and polyolefin film (**PF**).

22. Method according to Claim 20 or 21, **characterized in that** the step of contacting takes place at an adhesive temperature of 50°C or more, more particularly a temperature between 50 and 200°C, preferably between 100 and 150°C.

## Revendications

1. Composition adhésive thermofusible, comprenant
- au moins une polyoléfine thermoplastique solide à 25°C (P)
- au moins un polyester thermoplastique solide à 25°C (TPE)
- au moins un amide (A) de formule (I) ou (II) 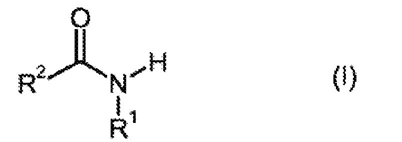 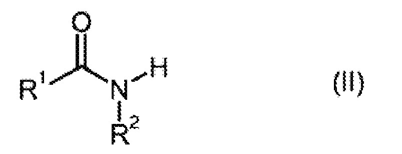
où
R¹ représente H, un groupe C₁-C₄-alkyle ou un groupe benzyle,
R² représente un groupe C₈-C₂₂-alkyle saturé ou insaturé.

2. Composition adhésive thermofusible selon la revendication 1, **caractérisée en ce que** la polyoléfine thermoplastique (P) est une poly-α-oléfine atactique (APAO) (P1).

3. Composition adhésive thermofusible selon la revendication 1, **caractérisée en ce que** la polyoléfine thermoplastique (P) est une poly-α-oléfine greffée par un silane (P2).

4. Composition adhésive thermofusible selon l'une quelconque des revendications précédentes, **caractérisée en ce que** R² représente un radical C₈-C₂₀-alkyle insaturé, en particulier un radical CₙH₂ₙ₋₁-alkyle ou un radical CₙH₂ₙ₋₃-alkyle ou un radical CₙH₂ₙ₋₅-alkyle avec n = 8-20, de préférence un radical alkyle oléfiniquement insaturé.

5. Composition adhésive thermofusible selon l'une quelconque des revendications précédentes, **caractérisée en ce que** R² représente un radical C₈-C₂₂-alkyle, en particulier un radical C₁₅-C₂₂-alkyle.

6. Composition adhésive thermofusible selon l'une quelconque des revendications précédentes, **caractérisée en ce que** l'amide (A) présente la formule (I) et R¹ représente H.

7. Composition adhésive thermofusible selon l'une quelconque des revendications précédentes, **caractérisée en ce que** l'amide (A) est choisi dans le groupe constitué par l'amide de l'acide laurique, myristique, palmitique, stéarique, arachidique, tuberculostéarique, palmitoléique, oléique, linoléique, linolénique, éléostéarique, érucique et arachidonique, en particulier **en ce que** l'amide (A) est l'amide de l'acide stéarique ou l'érucamide, de préférence l'érucamide.

8. Composition adhésive thermofusible selon l'une quelconque des revendications précédentes, **caractérisée en ce que** l'amide (A) présente un point de fusion entre 40 et 150°C, de préférence entre 50 et 110°C.

9. Composition adhésive thermofusible selon l'une quelconque des revendications précédentes, **caractérisée en ce que** la composition adhésive thermofusible présente une quantité d'amide (A) ≥ 5% en poids, en particulier de 5,0-20,0% en poids, de préférence de 7,0-15,0% en poids, par rapport à la composition adhésive thermofusible.

10. Composition adhésive thermofusible selon l'une quelconque des revendications précédentes, **caractérisée en ce que** le polyester thermoplastique (TPE) est un polycaprolactone-copolyester-uréthane linéaire.

11. Composition adhésive thermofusible selon l'une quelconque des revendications précédentes, **caractérisée en ce que** la composition adhésive thermofusible présente une quantité de polyester thermoplastique (TPE) de 5-30% en poids, de préférence de 7-15% en poids, par rapport à la composition adhésive thermofusible.

12. Composition adhésive thermofusible selon l'une quelconque des revendications précédentes, **caractérisée en ce que** la composition adhésive thermofusible présente en outre au moins un catalyseur, qui catalyse la réaction de groupes silane, en particulier en une quantité de 0,01-1,0% en poids, de préférence de 0,1-0,5% en poids, par rapport à la composition adhésive thermofusible.

13. Composition adhésive thermofusible selon l'une quelconque des revendications précédentes, **caractérisée en ce que** la composition adhésive thermofusible présente une quantité de polyoléfine thermoplastique (P) ≥ 50% en poids, en particulier de 50-95% en poids, de préférence de 60-80% en poids, par rapport à la composition adhésive thermofusible.

14. Utilisation d'une composition adhésive thermofusible selon l'une quelconque des revendications 1 à 13 pour le collage de feuilles de polyoléfine.

15. Utilisation selon la revendication 14 comme adhésif de contrecollage pour le collage de feuilles de polyoléfine.

16. Corps composite (1) présentant
- une feuille de polyoléfine (PF) ;
- une composition adhésive thermofusible selon l'une quelconque des revendications 1 à 13, ou, selon le cas, une composition adhésive thermofusible réticulée sous l'influence de l'eau selon l'une quelconque des revendications 1 à 13 ; ainsi que
- un substrat (S) ;
où la composition adhésive thermofusible ou, selon le cas, la composition adhésive thermofusible réticulée est disposée entre la feuille de polyoléfine et le substrat (S).

17. Corps composite selon la revendication 16, **caractérisé en ce que** le substrat (S) est un matériau fibreux, en particulier un matériau à base de fibres naturelles.

18. Corps composite selon la revendication 16 ou 17, **caractérisé en ce que** le corps composite est un objet de la fabrication industrielle, en particulier un objet pour l'équipement, de préférence une pièce à monter dans un moyen de transport ou un objet de la branche du mobilier.

19. Procédé pour la préparation d'un matériau composite selon la revendication 16 ou 17 ou 18, comprenant les étapes de
(i) fusion d'une composition adhésive thermofusible selon l'une quelconque des revendications 1 à 13
(ii) application de la composition adhésive thermofusible fondue sur une feuille de polyoléfine (PF)
(iii) chauffage de la feuille de polyoléfine
(iv) mise en contact du substrat (S) avec la composition adhésive thermofusible fondue.

20. Procédé selon la revendication 19, **caractérisé en ce que** l'étape de la mise en contact est réalisée avec une pression de compression, en particulier entre 0,1 bar et 1 bar, de préférence d'au moins 0,8 bar.

21. Procédé selon la revendication 20, **caractérisé en ce que** la pression de compression est produite par l'application d'une dépression dans l'espace entre le substrat (S) et la feuille de polyoléfine (PF).

22. Procédé selon la revendication 20 ou 21, **caractérisé en ce que** l'étape de la mise en contact est réalisée à une température de l'adhésif de 50°C ou plus, en particulier à une température entre 50 et 200°C, de préférence entre 100 et 150°C.
